# EUROPEAN PATENT SPECIFICATION

(11) **EP 0 724 843 B1**
(45) Date of publication and mention of the grant of the patent: **05.12.2001**
(21) Application number: 96300647.3
(22) Date of filing: 30.01.1996
(51) Int. Cl.: A23L 1/313, A23L 1/231

(54) **Process for producing a condiment mixture**
Verfahren zur Herstellung einer Würzmischung
Procédé de production d'un mélange de condiments

(30) Priority: 31.01.1995 JP 1424395
(43) Date of publication of application: 07.08.1996
(73) Proprietor: Ajinomoto Co., Inc., Tokyo 104 (JP)
(72) Inventor: Kubota, Kaoru, c/o Central Res. Lab., Kawasaki-ku, Kawasaki-shi, Kanagawa-ken (JP); Tsuyoshi, Naoko, c/o Central Res. Lab., Kawasaki-ku, Kawasaki-shi, Kanagawa-ken (JP); Yamanaka, Shigeru, c/o Central Res. Lab., Kawasaki-ku, Kawasaki-shi, Kanagawa-ken (JP); Kato, Toshio, c/o Food Res. & Dev. Lab., Kawasaki-ku, Kawasaki-shi, Kanagawa-ken (JP); Fukuda, Hisao, c/o Central Res. Lab., Kawasaki-ku, Kawasaki-shi, Kanagawa-ken (JP)
(74) Representative: Bond, Bentley George

(56) References cited:
- EP-A- 0 191 513
- EP-A- 0 505 733
- DE-C- 4 413 951
- JP-A- 5 276 488
- Krämer, Johannes: Lebensmittel-Mikrobiologie, Stuttgart: Ulmer 1987

## Description

The present invention relates to a process for producing a condiment mixture.

Extracts of livestock meats and bones thereof are used for various condiments or the bases thereof and have a wide range of applications. However, since the extracts when used alone are short of complexity in flavour and strength, and since the extracts (particularly those derived from chickens and pigs) have the problem that they have an animal smell, other extracts (e.g. vegetable extracts and relish components such as MSG and IMP), sugars and many other condiments and spices are normally added and used. Beef extract is used for many condiments, but an extract of good quality cannot be easily obtained and is expensive. Accordingly, various products are under development as the diversification of tastes proceeds, and the selection of raw materials of good quality and improvements in their processing methods and their blend ratios are desired in order to provide this large variation in taste.

Most fermented meats so far known are prepared by causing microorganisms to act biogenetically on meat. Such fermented meats include Iberian ham from Spain, Parma ham, San Daniel ham from Italy, Chinese ham from China, and country ham from the U.S.A.. Microorganisms separated from these fermented meats include filamentous fungi (Aspergilus spp, Penicillium ssp, Cladosporium herbarum and Alternaria tenuis), lactic acid bacteria, and yeast (T. Huerta, V. Sanchis, J. Hernandez, E. Hernandez: Microbiologie, 5, 247 (1987); D. Franc, T. Sandra, S. Alessandro, G. Fabrizio, T. Donatella: Industie allimentari, September, 676 (1984); and I. Morina, H. Silla, J. Flores: Fleischwirtsch, 70 (1), 115 (1990)). Some of these microorganisms can be used as a starter in preparing fermented meat (G. Campbell-Paltt, P.E. Cook: Fermented Meats, 134, (1995)). However, the relationship with taste is complicated, and many aspects which have not yet been clarified are involved.

The object of the present invention is to reduce or eliminate animal smell from livestock meat, and to provide and enhance beef-like taste in order to further improve conventional condiments and soup bases, and to increase the variation in condiments, and to provide a simple blending method for producing a condiment mixture having an enhanced taste, body flavour and complex flavour.

According to the present invention, there is provided a process for producing a condiment mixture, which process comprises:
(1) preparing denatured meat by a process which comprises:
   (a) salting livestock meat with a salting or preserving agent;
   (b) washing the salted meat and drying the meat; and
   (c) inoculating the washed meat with a microorganism and then allowing the meat to ferment and ripen to produce said denatured meat, wherein the microorganism used is at least one of (i) a filamentous fungi belonging to a Penicillium genus, an Eurotium genus, an Aspergillus genus, a Monascus genus or a Paecilobyces genus, or (ii) a yeast belonging to a Pichia genus or a Debaryomyces genus, or (iii) a mixture thereof;
(2) if desired, producing an extract of said denatured meat; and
(3) mixing said denatured meat, or said extract of said denatured meat, or a mixture thereof, as an additive, with a base condiment or a soup base to produce said condiment mixture, wherein the amount of said denatured meat and/or said extract in the condiment mixture, based on (i) the solid matter content of said denatured meat extract when denaturated meat extract is used, or on (ii) the solid matter content of an extract of said denatured meat when denatured meat is used, is 5 to 60 weight %.

Thus, the nature of this invention is to improve a conventional condiment (i.e. a base condiment), such as MSG, ribonucleotides, animal or vegetable extracts and mixtures thereof, or a soup base such as a consomme base, by blending (mixing) the base condiment or soup base with denatured meat or extract therefrom which is obtained by causing microorganisms to act on livestock meat.

The microorganism used is at least one of filamentous fungi belonging to the Penicillium genus, the Eurotium genus, the Aspergillus genus, the Monascus genus or the Paecilomyces genus and/or a yeast belonging to the Pichia genus or the Debaryomyces genus.

From 5 to 60 weight %, preferably 25 to 40 weight % based on (i) the solid matter content of the denatured meat extract when denatured meat extract is used, or on (ii) the solid matter content of an extract of said denatured meat when denatured meat is used, is suitable for the development of a synergistic effect.

The present inventors have paid attention to the fact that fermented meat and/or extracts thereof have a peculiar flavour and have confirmed that they can be utilized for many dishes. In this connection, it has been found that if the additives are added in proper quantities to base condiments (e.g. commercially available condiments) or to soup bases such as a consomme base, the animal smell is reduced to a greater extent than in the case of those that are added independently, and that the taste, body flavour and complex flavour are increased, and that, surprisingly, a beef-like taste is developed or increased. Thus, the present invention has come to be completed. That is to say, the present invention relates to a process for producing a condiment mixture, in which the denatured meat obtained by the specified process, and/or an extract thereof, is added to a base condiment or a soup base, whereby the base condiment or the soup base is provided with a beef-like taste and has fragrance. In other words, the raw material is denatured to form an additive having a fragrance and taste which are different from those of the raw material.

The present invention will be described below in detail.

The denatured meat used in the present invention is produced by a series of steps, wherein livestock meat is salted with a salting or preserving agent and microorganisms are grown thereon.

The raw material used for the denatured meat of the present invention is livestock meat, for example beef, pork, horsemeat, mutton and chicken. The part of the meat is not important. Thus, for example, dark meat which is thick is easy to handle may be used.

The microorganisms which are caused to act in producing the denatured meat of the present invention, are microorganisms of Penicillium, Eurotium, Aspergillus and Paecilomyces, and include, for example, Penicillium roquefortii, Penicillium ganulatum, Penicillium myczinskii, Penicillium expansam, Penicillium cyaneo-fulvun, Eurotium chevalieri, Eurotium repens, Aspergillus oryzae, Aspergillus soyae, Aspergrillus glaucus, Aspergillus ussami and Paecilomyces fumosoroseus. Further microorganisms are these of Monascus, Pichia and Debaryomyces, and include, for example, Monascus anka, Pichia anomala and Debaryomyces hanzenii. The microorganisms may be used singly or as a mixture of two or more thereof.

Representative strains of microorganisms belonging to these respective genera are deposited and preserved in Japanese and overseas public microorganism deposition organizations, and can be purchased and used for carrying out the present invention. The Japanese and overseas microorganism deposition organizations preserving strains of microorganisms used in the present invention include, for example, Centraalbureau voor Schimmelculturers (CBS), Baarn, Netherlands; Fermentation Institute Foundation (IFO), Japan; and The Institute of Physical and Chemical Research, Microorganism System Preserving Facility (JCM), Wako, Saitama prefecture, Japan.

Furthermore, microorganisms belonging to these respective genera can be separated from foods containing them, for example, from Chinese cheese, dried bonito, cheese, salami sausage and raw ham.

A preferred process for producing denatured meat will now be described. First, meat is cut to an appropriate size if necessary. If no restrictions are put on the material and the production site, for example, legs can be used. Then, the skin, hair and dirt are scrapped off, any unnecessary fat is removed, and blood is squeezed out. Salting may be carried out by a wet salting method in which pieces of the meat are salted in pickle, or by a dry salting method in which a salting agent is rubbed into pieces of the meat. Salt, nitrate or nitrite can be used as the salting agent. There can be used those salting agents usually used for ham and sausage, such as sucrose, glucose, ascorbic acid, lactic acid, phosphates, sorbic acid and spice. The salt can be used in an amount of 1 to 30%, preferably 5 to 20%, of the meat. The period and frequency of the salting are suitably adjusted as desired. The meat, washed well with water and dried to some extent after the salting, is acted upon by the microorganism. The method of treatment includes coating a cultivation liquid of the microorganism onto the meat, for example by dipping the meat in the cultivation liquid, or (particularly in case of filamentous fungi), spores or conidiospores, as they are or in the form of a suspension, are sprayed or coated onto the meat. The period of treatment can be, for example, 7 days to 3 years, and the temperature of treatment can be, for example, -2 to 40°C, preferably one month to one year and 5 to 20°C. With respect to the kind of meat and a difference, even in the same strains are used under the same conditions, the resulting denatured meats are different, which may be due to the fact that, as meats are natural materials, special attention has to be paid to their environmental management.

The denatured meat is reduced in its water content by causing the microorganism to act thereon after salting, and protein and fat in the meat are decomposed by the enzymatic action of the microorganism. As a result, a peculiar fragrance is given to the denatured meat. In addition, a peculiar taste, body flavour and acidic flavour are given to the denatured meat. Furthermore, since the generation of antioxidant substances increases the degree of preservation of the meat, both the appearance and the quality thereof are improved. The smell peculiar to meat disappears; conversely, the characteristic taste and good fragrance peculiar to ripened meat are provided.

The denatured meat and/or an extract thereof (e.g. a heat-extracted extract thereof) is added to a base condiment, e.g. a sauce, or to a soup base, in its existing form (i.e. in solid form) or in the form of a liquid, a powder or a solid block. The amount thereof added is suitably determined according to necessity. From 5 to 60 weight %, preferably 25 to 40 weight %, based on the solid matter content of the denatured meat and/or the extract, is suitable for the development of a synergistic effect.

The present invention will now be illustrated by the following Examples.

### Examples

A mixture of salt (150 g), sodium nitrite (0.1 g) and sodium nitrate (1.9 g) was rubbed sufficiently on the surface of the ham of a pig weighing 1 kg, and the ham was ripened at 2°C for 30 days. The ham was washed with running water and dried at 10°C and at a relative humidity of 75% for 3 days until the moisture activity in the meat reached 0.95.

A spore suspension (2.0 x 10⁵/ml) of Penicillium expansum IFO 5453 was sprayed on the surface of the ham, and the sprayed meat was ripened at 15°C for 6 months, whereby denatured meat in an amount of about 640 g was obtained (denatured meat 1).

Denatured meat 2 was obtained in the same manner as described above, except that Eurotium repens IFO 4885 was substituted for the Penicillium expansum IFO 5453.

Denatured meat 3 was obtained in the same manner as described above, except that spore suspensions (each 2.0 x 10⁵/ml) of each of Penicillium expansum IFO 5453 and Eurotium repens IFO 4885, spore suspensions (each 2.0 x 10⁵/ml) of each of Aspergillus oryzae IFO 30104, Monascus anka IFO 4478 and Paecillomyces fumosoroseus IFO 7072, and spore suspensions (each 1.0 x 10⁵/ml) of each of Debaryomyces hanzenii IFO 17 and Pichia anomala IFO 130 were used.

Water in an amount of 5 weight parts per one weight part of denatured meat was added to the above denatured meats 1, 2 and 3, respectively, and, after heating them at 100°C for one hour, solid matter was removed by filtering, and furthermore oil matter was separated, whereby a denatured meat extract (a pure extract whose solid content accounted for about 10% of the weight of the denatured meat) was obtained (denatured meat extracts 1, 2 and 3).

Denatured meat 3 was used to prepare soup bases having the compositions shown in Table 1, and a sensuous evaluation was carried out.

**Table 1**

| Composition of the soup base (Unit: g) | | | |
|---|---|---|---|
| | Reference 1 | Sample A | Sample B |
| NaCl | 4.0 | 4.0 | 4.0 |
| Sugar | 1.5 | 1.5 | 1.5 |
| MSG | 1.2 | 1.2 | 1.2 |
| Soybean oil | 1.0 | 1.0 | 1.0 |
| IMP | 0.015 | 0.015 | 0.015 |
| Denatured Meat | - | 25 | 50 |
| Ham | 25 | - | - |
| Note: The amount of salt from the denatured meat was corrected to make the final salt concentration of the soup base the same as that of the reference 1. | | | |

Water (500 ml) was added to the blended products described above, and the mixtures were heated. When they boiled, they were poured into sampling cups to carry out a sensuous evaluation.

The sensuous evaluation was carried out with ten panellists. The evaluation items are shown in Table 2. The scores were counted by a 5-point evaluation ranging from -1 (weak) to +2 (strong) with zero being allocated to reference 1 in the case of the items other than the total evaluation, and by an 11-point evaluation ranging from 0 to 10 points with 5 points being allocated to reference 1 in case of the total evaluation.

**Table 2 -**

| Sensuous evaluation of soup | | | |
|---|---|---|---|
| | Reference 1 | Sample A | Sample B |
| Strength of fragance | 0 | 0.8 | 1.2 |
| Strength of animal smell | 0 | -1.0 | -0.1 |
| Strength of pork flavour | 0 | -0.4 | 0.3 |
| Strength of beef flavour | 0 | 1.1 | 1.5 |
| Strength of taste | 0 | 0.6 | 1.0 |
| Strength of body flavour | 0 | 0.7 | 1.1 |
| Strength of complex flavour | 0 | 0.7 | 1.3 |
| Total evaluation | 5 | 7.4 | 5.5 |

The results of the sensuous evaluation show that the soup containing the denatured meat (Sample A) has an enhanced beef-like taste, body flavour, and complex flavour and a reduced animal smell held by the ham as compared with Reference 1. Thus, the effects of the denatured meat used according to the present invention have been observed. However, in the case of Sample B, in which the amount of the denatured meat was greater, it was observed that the fragrance and flavour of the denatured meat tends to be too strong.

The denatured meat extract from the denatured meat 3 was used to prepare the soups shown in Table 3, and after heating and boiling them, the soups were subjected to sensuous evaluation. The product known by the brand name Chicken Consomme, manufactured by Knorr Co., Ltd., was used as the consomme cube.

**Table 3-**

| Composition of soup | | | |
|---|---|---|---|
| | Reference 2 | Sample C | Sample D |
| Consomme cube | 1 piece | 1 piece | ½ piece |
| Denatured meat extract | - | 100 ml | 100 ml |
| Water | 300 ml | 200 ml | 300 ml |

Sensuous evaluation was carried out using the same panellists in the same manner as in the case of the tests reported in Table 2. The results are given in Table 4.

**Table 4-**

| Sensuous evaluation of soup | | | |
|---|---|---|---|
| | Reference 2 | Sample C | Sample D |
| Strength of fragrance | 0 | 0.8 | 0.8 |
| Strength of beef flavour | 0 | 1.1 | 0.7 |
| Strength of taste | 0 | 1.6 | 0.5 |
| Strength of body flavour | 0 | 1.3 | 0.8 |
| Strength of complex flavour | 0 | 1.0 | 0.8 |
| Total evaluation | 5 | 5.9 | 7.8 |

The results of the sensuous evaluation show that in the case of both of Sample C and Sample D, in which the denatured meat extract was present, an enhanced body flavour and complex flavour was obtained as compared to the case of reference 2, and that an enhanced beef-like taste was obtained even though pork was used as the raw material. Thus, the effects of the denatured meat according to the present invention were observed.

Next, there were prepared Samples E and F using the denatured meats 1 and 2, the sample having the same composition as that of Sample A in Table 1, and Samples G and H using the denatured meat extracts 1 and 2, the samples having the same composition as that of Sample D in Table 3. The samples were subjected to sensuous evaluation, and the results are reported in Tables 5 and 6.

**Table 5 -**

| Sensuous evaluation of soup | | | |
|---|---|---|---|
| | Reference 1 | Sample E | Sample F |
| Strength of fragrance | 0 | 0.5 | 1.0 |
| Strength of animal smell | 0 | -0.8 | -1.1 |
| Strength of pork flavour | 0 | 0.1 | -0.6 |
| Strength of beef flavour | 0 | 0.1 | 1.3 |
| Strength of taste | 0 | 0.8 | 0.1 |
| Strength of body flavour | 0 | 0.8 | 0.1 |
| Strength of complex flavour | 0 | 0.7 | 0.3 |
| Total evaluation | 5 | 5.4 | 6.5 |

The results of the sensuous evaluation show that Sample E, in which the denatured meat 1 was present, has an enhanced body flavour and complex flavour as compared with reference 1, and that Sample F, in which the denatured meat 2 was present, has an enhanced beef-like taste. Thus the effects of the denatured meat according to the present invention have been observed. Sample A was high in terms of the total evaluation as compared with Samples E and F.

**Table 6 -**

| Sensuous evaluation of soup | | | |
|---|---|---|---|
| | Reference 1 | Sample G | Sample H |
| Strength of fragrance | 0 | 0.6 | 1.1 |
| Strength of beef flavour | 0 | 0.1 | 0.8 |
| Strength of taste | 0 | 0.7 | 0.2 |
| Strength of body flavour | 0 | 0.8 | 0.3 |
| Strength of complex flavour | 0 | 0.8 | 0.3 |
| Total evaluation | 5 | 5.5 | 6.7 |

The results of the sensuous evaluation show that Sample G, in which the denatured meat 1 was present, has an enhanced body flavour and complex flavour as compared with reference 2, and that Sample H, in which the denatured meat 2 was present, has an enhanced beef-like taste. Thus, the effects of the denatured meat according to the present invention have been observed. Sample D was high in terms of the total evaluation as compared with Samples G and H.

As explained above, a condiment which has no animal smell or a reduced animal smell, and which has a beef-like flavour or an enhanced beef-like flavour, can be produced according to the present invention.

## Claims

1. A process for producing a condiment mixture, which process comprises:
(1) preparing denatured meat by a process which comprises:
(a) salting livestock meat with a salting or preserving agent;
(b) washing the salted meat and drying the meat ; and
(c) inoculating the washed meat with a microorganism and then allowing the meat to ferment and ripen to produce said denatured meat, wherein the microorganism used is at least one of (i) a filamentous fungi belonging to a Penicillium genus, an Eurotium genus, an Aspergillus genus, a Monascus genus or a Paecilobyces genus, or (ii) a yeast belonging to a Pichia genus or a Debaryomyces genus, or (iii) a mixture thereof;
(2) if desired, producing an extract of said denatured meat; and
(3) mixing said denatured meat, or said extract of said denatured meat, or a mixture thereof, as an additive, with a base condiment or a soup base to produce said condiment mixture, wherein the amount of said denatured meat and/or said extract in the condiment mixture, based on (i) the solid matter content of said denatured meat extract when denatured meat extract is used, or on (ii) the solid matter content of an extract of said denatured meat when denatured meat is used, is 5 to 60 weight %.

2. A process according to claim 1, wherein the amount of said denatured meat and/or said extract in the condiment mixture, based on (i) the solid matter content of said denatured meat extract when denatured meat extract is used, or on (ii) the solid matter content of an extract of said denatured meat when denatured meat is used, is 25 to 40 weight %.

3. A process according to claim 1 or 2, wherein the livestock meat is beef, pork, horsemeat, mutton or chicken.

4. A process according to claim 3, wherein the livestock meat is dark meat.

5. A process according to any of claims 1 to 4, wherein the condiment is MSG, a ribonucleotide, an animal extract, a vegetable extract, or a sauce.

6. A process according to any of claims 1 to 4, wherein the soup base is a consomme base.

## Patentansprüche

1. Verfahren zur Herstellung einer Würzmischung, umfassend
(1) das Herstellen von denaturiertem Fleisch durch ein Verfahren, beinhaltend
(a) das Salzen von Schlachtfleisch mit einem Salz oder Konservierungsmittel;
(b) das Waschen sowie Trocknen des gesalzenen Fleisches; und
(c) das Animpfen des gewaschenen Fleisches mit einem Mikroorganismus und das Aussetzen des Fleisches einer Fermentierung und Reifung, so dass man ein denaturiertes Fleisch erhält,
wobei mindestens ein Mikroorganismus eingesetzt wird aus der Gruppe der
(i) filamentösen Pilze der Gattungen Penicillium, Eurotium, Aspergillus, Monascus oder Paecilobyces, oder
(ii) eine Hefe aus den Gattungen Pichia oder Debaryomyces oder
(iii) ein Gemisch hiervon; und
(2) gegebenenfalls Herstellen eines Extrakts von dem denaturierten Fleisch; und
(3) Mischen des denaturierten Fleisches oder des Extrakts von dem denaturierten Fleisch oder einer Mischung hiervon in Form eines Zusatzes mit einer Grundwürze oder einer Suppenbasis,
so dass man eine Würzmischung erhält, in welcher die Menge an denaturiertem Fleisch und/oder Extrakt gleich 5 bis 60 Gew.% ist, bezogen auf (i) den Feststoffgehalt des denaturierten Fleischextrakts, wird ein denaturierter Fleischextrakt verwendet, oder auf (ii) den Feststoffgehalt eines Extrakts des denaturierten Fleisches, wird denaturiertes Fleisch verwendet.

2. Verfahren nach Anspruch 1, wobei die Menge an denaturiertem Fleisch und/oder Extrakt in der Würzmischung 25 bis 40 Gew.% beträgt, beruhend auf (i) den Feststoffgehalt des denaturierten Fleischextrakts, wird denaturierter Fleischextrakt verwendet, oder (ii) des Feststoffgehalt des Extrakts von denaturiertem Fleisch, wird denaturiertes Fleisch verwendet.

3. Verfahren nach Anspruch 1 oder 2, wobei das Schlachtfleisch von Rind, Schwein, Pferd, Schaf oder Huhn stammt.

4. Verfahren nach Anspruch 3, wobei das Schlachtfleisch dunkles Fleisch ist.

5. Verfahren nach irgendeinem der Ansprüche 1 bis 4, wobei die Würze MSG ist, ein Ribonucleotid, ein Tierextrakt, ein Gemüseextrakt oder eine Soße.

6. Verfahren nach irgendeinem der Ansprüche 1 bis 4, wobei die Suppenbasis eine Consommé-Basis ist.

## Revendications

1. Procédé pour produire un mélange de condiments, ce procédé consistant à :
(1) préparer de la viande modifiée grâce à un procédé qui consiste à :
(a) saler de la viande de bétail avec un agent de salage ou de conservation ;
(b) laver la viande salée puis la sécher ; et
(c) inoculer un microorganisme à la viande lavée puis permettre à cette dernière de fermenter et de s'affiner pour produire ladite viande modifiée, en utilisant au moins un microorganisme parmi (i) un champignon filamenteux appartenant à l'espèce des gênes de Pénicillium, d'Eurotium, d'Aspergillus, de Monascus ou de Paecilobyces, ou (ii) une levure appartenant à l'espèce des gênes de Pichia ou de Debaryomyces, ou encore (iii) un mélange de ceux-ci ;
(2) si on le souhaite, produire un extrait de ladite viande modifiée ; et
(3) mélanger ladite viande modifiée, ledit extrait de ladite viande modifiée ou un mélange des deux, en tant qu'additif, à un condiment de base ou une base de soupe pour produire ledit mélange de condiments, la proportion de ladite viande modifiée et/ou dudit extrait dans le mélange de condiments, basée sur (i) la teneur en matière solide dudit extrait de viande modifiée lorsque de l'extrait de viande modifiée est utilisé; ou sur (ii) la teneur en matière solide d'un extrait de ladite viande modifiée lorsque de la viande modifiée est utilisée, étant de 5 à 60% en masse.

2. Procédé selon la revendication 1, dans lequel la proportion de ladite viande modifiée et/ou dudit extrait dans le mélange de condiments, basée sur (i) la teneur en matière solide dudit extrait de viande modifiée lorsque de l'extrait de viande modifiée est utilisé, ou sur (ii) la teneur en matière solide d'un extrait de ladite viande modifiée lorsque de la viande modifiée est utilisée, est de 25 à 40% en masse.

3. Procédé selon la revendication 1 ou 2, dans lequel la viande de bétail est du boeuf, du porc, du cheval, du mouton ou du poulet.

4. Procédé selon la revendication 3, dans lequel la viande de bétail est de la viande foncée.

5. Procédé selon une quelconque des revendications 1 à 4, dans lequel le condiment est du MSG, un ribonucléotide, un extrait animal, un extrait végétal ou une sauce.

6. Procédé selon une quelconque des revendications 1 à 4, dans lequel la base de soupe est une base de consommé.
